# EUROPÄISCHE PATENTSCHRIFT

(11) **EP 3 833 817 B1**
(45) Veröffentlichungstag und Bekanntmachung des Hinweises auf die Patenterteilung: **03.08.2022**
(21) Anmeldenummer: 19755273.0
(22) Anmeldetag: 06.08.2019
(51) Int. Cl.: E01B 31/12, E01B 31/13, E01B 31/15, E01B 31/17, B23C 3/00, B23P 6/00, B24B 19/00, B24B 23/00, B23P 9/02

(54) **VERFAHREN UND VORRICHTUNG ZUM BEARBEITEN DER LAUFFLÄCHE EINER SCHIENE**
METHOD AND APPARATUS FOR MACHINING THE RUNNING SURFACE OF A RAIL
PROCÉDÉ ET DISPOSITIF D'USINAGE DE LA SURFACE DE ROULEMENT D'UN RAIL

(30) Priorität: 07.08.2018 AT 506752018
(43) Veröffentlichungstag der Anmeldung: 16.06.2021
(73) Patentinhaber: MATE GmbH, 4656 Kirchham bei Vorchdorf (AT)
(72) Erfinder: KUBIN, Wilhelm, 4662 Steyrermühl (AT); DAVES, Werner, 8700 Leoben (AT); ECKER, Werner, 8700 Leoben (AT)
(74) Vertreter: Hübscher & Partner Patentanwälte GmbH
(86) Internationale Anmeldenummer: PCT/AT2019/060252
(87) Internationale Veröffentlichungsnummer: WO 2020/028930

(56) Entgegenhaltungen:
- EP-A1- 2 886 714
- WO-A1-02/06587
- CN-B- 104 674 617
- JP-A- 2000 263 175

## Beschreibung

### Technisches Gebiet

Die Erfindung bezieht sich auf ein Verfahren zum Bearbeiten der Lauffläche einer Schiene mit Hilfe wenigstens eines entlang der Schiene bewegbaren und an deren Lauffläche andrückbaren, rotierenden, spanabhebenden Formgebungswerkzeugs und auf eine Vorrichtung zur Durchführung dieses Verfahrens.

### Stand der Technik

Schienen von Schienenfahrzeuggleisen unterliegen einem Verschleiß, der durch Kontaktkräfte zwischen Schienen und darauf abrollenden Schienenfahrzeugrädern bewirkt wird. Die dabei auftretenden, unerwünschten verschleißbedingten Veränderungen des Schienenquerschnitts werden zur Verlängerung der Lebensdauer regelmäßig oder anlassbezogen einem Verfahren zum Reprofilieren unterzogen. Auch eine präventive Bearbeitung ist möglich. Schienenunebenheiten im Bereich des befahrenen Schienenkopfes werden in Längswellen (entlang der Schienenachse), in Riffel (quer zur Schienenachse) und letztendlich in Rauhigkeiten eingeteilt. Längswellen entstehen in der Regel durch den Fahrbetrieb. Riffel entstehen beispielsweise auch durch ein Fräsen des Schienenkopfes. Rauhigkeiten entstehen insbesondere im Zuge einer Schleifbearbeitung des Schienenkopfes. Ein Reprofilieren des Schienenkopfes erfolgt vorwiegend mit spanabhebenden Bearbeitungsverfahren wie etwa Schleifen, Hobeln, Drehhobeln oder Fräsen, wobei diese Bearbeitungsverfahren entweder an ausgebauten Schienen ausgerührt werden oder heute meist mittels schienengeführten Bearbeitungsfahrzeugen im verlegten Gleis erfolgen können (EP 2 638 209 A1).

Ein Verfahren und eine Vorrichtung zum Reprofilieren einer Schiene ist beispielsweise aus WO 02/06587 A1 bekannt. Darin ist ein gleisgeführtes Bearbeitungsfahrzeug offenbart, mit dem die Lauffläche einer Schiene, die im Wesentlichen die Fahrfläche und die Fahrkante umfasst, mittels Umfangsfräsen und erforderlichenfalls mittels eines Schleifvorganges wieder an das Sollprofil herangeführt oder angenähert wird. Mit einem derartiges Verfahren und einem derartigen Bearbeitungsfahrzeug kann in kurzer Zeit auf rationelle Weise das Sollprofil von Schienen wiederhergestellt werden. Deren Einsatz ist jedoch bisher nur auf durchgehenden Gleisabschnitten möglich gewesen, während an Gleisabschnitten mit Unterbrechungen der Schienen, wie zum Beispiel im Bereich von Weichen und Kreuzungen das Reprofilieren vielfach mit handgerührten Bearbeitungswerkzeugen oder kleineren Spezialvorrichtungen erfolgt. Deshalb wurde mit der EP 2 638 209 A1 ein Verfahren und eine Vorrichtung zum Reprofilieren von Schienen vorgeschlagen, mit dem ein rationelles und definiertes Reprofilieren auch im Bereich von Weichen und Gleiskreuzungen möglich ist.

Es hat sich gezeigt, (Sadeghi, J., Hasheminezhad, A. Correlation between rolling noise generation and rail roughness of tangent tracks and curbes in time and frequency domains. Applied Acoustics 2016; 107: 10 - 18), dass eine periodische Rauigkeit an einer Schienenoberfläche, wie sie nach einem Reprofilieren der Schiene durch ein Fräsen oder gegebenenfalls auch durch ein Schleifen entsteht, zu einem wesentlichen Anstieg des Schalldruckes bei einem Überrollen der Schiene mit einem Schienenfahrzeugrad führt, was eine hohe akustische Belastung der Umwelt beim Überrollen darstellt.

Auch in Folge des Schienenfahrbetriebes entstehen auf den die Fahrflächen bildenden Schienenoberseiten lokale periodische Fahrflächenunebenheiten, die beim Abrollen der Räder des Schienenfahrzeuges Schwingungen und Körperschall verursachen, die zu einer Lärmbelästigung der Umwelt und zu einer Lärm-und Schwingungsbelästigung der Fahrgäste führen. Eine Möglichkeit zur frühzeitigen Erkennung von Fahrflächenunebenheiten ist aus der EP 1 612 551 A1 bekannt. Zur Ermittlung der Rauheit von frisch geschliffenen Schienen und /oder Schienenbereichen erden dazu Wlrbelstrom-Prüfsonden über Bereiche von Schienensegmenten geführt und die Messsignale ortabhängig ausgewertet.

### Darstellung der Erfindung

Der Erfindung liegt somit die Aufgabe zugrunde, ein Verfahren anzugeben und eine Vorrichtung zu schaffen, wobei eine periodische Rauigkeit an einer Schienenoberfläche, wie sie beispielsweise nach einem Reprofilieren der Schiene durch ein Fräsen oder gegebenenfalls auch durch ein Schleifen entsteht, mit einfachen Mitteln vermieden werden kann.

Die Erfindung löst die gestellte Aufgabe dadurch, dass nach der Bearbeitung mit dem spanabhebenden Formgebungswerkzeug wenigstens ein der formbearbeiteten Schienenoberfläche angepasster Rollkörper zwecks Einebnung von Unebenheiten der Lauffläche der Schiene, unter Kaltverformung der Lauffläche der Schiene über die Schiene gerollt wird.

Der als Walze wirkende Rollkörper rollt mit seinem Mantel auf der Lauffläche der Schiene ab, wobei die Erzeugende der auf der Lauffläche um eine Achse abrollenden Mantelfläche, dem Querschnitt einer formbearbeiteten, also bereits reprofilierten Schienenoberfläche entspricht. Bei dem erfindungsgemäßen Verfahren werden im Rahmen der Schieneninstandhaltung im Anschluss an den Schienenreprofilierungsprozeß, beispielsweise durch Fräsen, Dobeln und/oder Schleifen, ein oder mehrere, der reprofilierten Lauffläche angepasste, Rollkörper mit hohem Kontaktdruck über die Schiene gerollt, um die beim reprofilieren entstandenen Unebenheiten, insbesondere Längswellen bzw. Riffel einzuebnen und/oder die Rauigkeit der Oberfläche zu modifizieren. Erfindungswesentlich ist, dass die Nachbearbeitung mit dem Rollkörper nicht abrasiv erfolgt, sondern unter Kaltverformung, also ohne Materialabtrag, erfolgt. Das Verfahren arbeitet daher funken- und rückstandslos sowie ohne die Schienenfestigkeit beeinflussenden Wärmeeintrag in die Schiene. Durch den hohen Kontaktdruck kommt es bei entsprechend kleiner Kontaktfläche mit der Schiene zu einer die gewünschte Kaltverformung verursachenden Pressung. Insbesondere sollen Riffel geglättet werden, um periodische Rauigkeit an der Schienenoberfläche zu verringern und Geräuschemissionen, wie sie beim Überrollen der Schiene mit einem Schienenfahrzeugrad entstehen zu vermeiden bzw. merklich zu verringern.

Der Rollkörper wird unter Kaltverformung wenigstens der Lauffläche der Schiene über die Schiene gerollt, Es kann aber auch die Fahrkante erfindungsgemäß bearbeitet werden.

Wird der Rollkörper mit einem vor- oder nacheilenden Schlupf von zwischen 0,001 und 20% über die Schiene gerollt, so können mit dem Verfahren noch bessere Ergebnisse erzielt werden. Der Rollkörper dreht sich also je nach Bedarf schneller oder langsamer, als er es bei schlupffreiem Abwälzen auf der Schiene tun würde.

Es empfiehlt sich, wenn der Rollkörper aus einem höherfesten Material als die Schiene besteht und mit einer vorgegeben, insbesondere feinstrukturierten, Oberflächenstruktur über die Schiene gerollt wird, wobei die Oberflächenstruktur im Überrollprozess plastisch in die Schiene eingedrückt wird. Der Rollkörper weist auf der auf der Schiene abrollenden Mantelfläche die gewünschte feinstrukturierte, Oberflächenstruktur auf, die mit oder ohne Schlupf über die Schiene gerollt wird. Unter dieser Oberflächenstruktur wird eine Oberfläche verstanden, die definierten Hügel und Täler aufweist, wobei die in die Schienenoberfläche eindringenden Hügel eine plastische Verformung der Lauffläche der Schiene begünstigende lokale Spitzendrücke generieren können. Damit können Längswellen bzw. Riffel zumindest teilweise eingeebnet werden.

Um die nötige Pressung zwischen Rollkörper und Schiene mit vertretbarem Aufwand erzielen zu können. Wird vorgeschlagen, dass der Rollkörper mit einem nominellen Kontaktdruck von 0,8 bis 2, insbesondere von 1,2 bis 1.75GPa, über die Schiene gerollt wird. Unter dem nominellen Kontaktdruck wird der Kontaktdruck zischen einem (idealisierten) glatten Rollkörper und einer (idealisierten) glatten Schiene verstanden.

Die vorbeschriebenen Maßnahmen fördern eine gezielt oberflächennahe Plastifizierung der Schiene, welche einer Einebnung der Wellen bzw. Riffel zuträglich ist. Ziel des Verfahrens ist es, die durch das Reprofilieren erzeugten Unebenheiten in der Lauffläche der Schiene, welche als Ursache der Anregung von schallerzeugenden Schwingungen im Rad-Schiene System gesehen werden, soweit zu glätten, dass diese Anregung verhindert wird.

Es können wenigstens zwei Rollkörper nacheinander unter Kaltverformung der Lauffläche der Schiene über die Schiene gerollt werden, wobei es insbesondere von Vorteil ist, wenn die Rollkörper mit unterschiedlichem Schlupf und/oder unterschiedlicher Oberflächenstruktur und/oder unterschiedlichem Kontaktdruck über die Schiene gerollt werden.

Gleichermaßen können das Formgebungswerkzeug und das Rollwerkzeug auch auf einer stationären Bearbeitungsvorrichtung aufgebaut sein und kann die Schiene in diesem Fall mit einem Vorschub entlang des Formgebungswerkzeugs und des Rollwerkzeugs zum Bearbeiten wenigstens der Lauffläche einer Schiene verlagert werden.

Eine erfindungsgemäße Vorrichtung zum Bearbeiten wenigstens der Lauffläche einer Schiene umfasst ein schienengeführten Bearbeitungsfahrzeug bzw. eine stationäre Bearbeitungsvorrichtung, wobei Bearbeitungsfahrzeug bzw. Bearbeitungsvorrichtung derart ausgeführt sind, dass Formgebungswerkzeug und Rollwerkzeug einerseits und die Schiene anderseits gegeneinander bewegbar sind, wobei das wenigstens eine an die Lauffläche der Schiene andrückbare, rotierende, spanabhebende Formgebungswerkzeug die Schiene bearbeitet. Dem spanabhebenden Formgebungswerkzeug ist in seiner Arbeitsrichtung ein der formbearbeiteten Schienenoberfläche angepasster, als Walze wirkender Rollkörper nachgeordnet, der zwecks Einebnung von Unebenheiten der Lauffläche der Schiene, unter Kaltverformung der Lauffläche der Schiene mit dem Bearbeitungsfahrzeug entlang der Schiene bewegbar und dabei mit einem Stelltrieb gegen die Lauffläche der Schiene andrückbar ist.

Eine erfindungsgemäße Vorrichtung zur Durchführung des Verfahrens ist in der Figurenbeschreibung dargestellt.

### Kurze Beschreibung der Erfindung

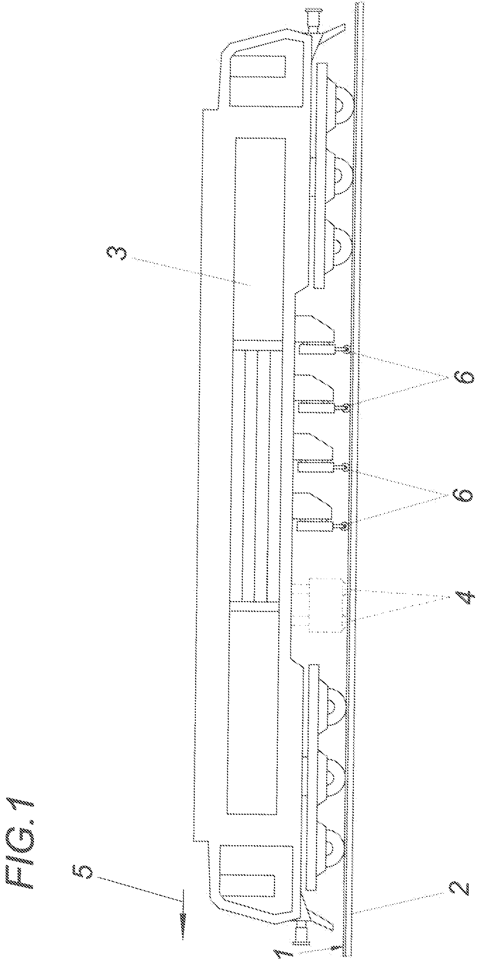

In der Zeichnung ist der Erfindungsgegenstand schematisch beispielsweise dargestellt. Es zeigen
- Fig. 1: ein Bearbeitungsfahrzeug mit einer erfindungsgemäßen Vorrichtung in Seitenansicht

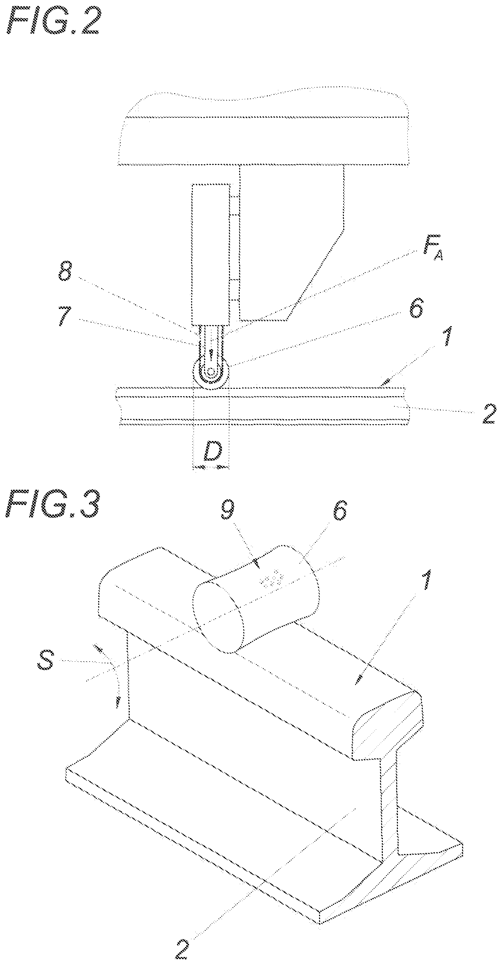

- Fig. 2: eine vergrößerte Seitenansicht eines Details der Vorrichtung aus Fig. 1 in Seitenansicht,
- Fig. 3: einen auf einer Schiene abrollenden Rollkörper in Schrägansicht,
- Fig. 4: ein Diagramm die Einebnung fräserbedingter Längswellen darstellend und
- Fig. 5: ein Diagramm die Einebnung fräserbedingter Querwellen (Riffel) darstellend.

### Weg zur Ausführung der Erfindung

Die Vorrichtung zum Bearbeiten der Lauffläche 1 einer Schiene 2 mit einem schienengeführten Bearbeitungsfahrzeug 3 umfasst wenigstens ein entlang der Schiene bewegbares und an deren Lauffläche 1 andrückbares, rotierendes, spanabhebendes Formgebungswerkzeug 4. Dem spanabhebenden Formgebungswerkzeug 4 ist in seiner in Schienenlängsrichtung verlaufenden Arbeitsrichtung 5 ein der formbearbeiteten Schienenoberfläche angepasster Rollkörper 6 nachgeordnet, der zwecks Einebnung von Unebenheiten der Lauffläche 2 der Schiene, unter Kaltverformung wenigstens der Lauffläche, insbesondere der formbearbeiteten Schienenoberfläche, der Schiene 2 mit dem Bearbeitungsfahrzeug 3 entlang der Schiene 2 bewegbar und dabei mit einem Stelltrieb 7 gegen die Lauffläche 1 der Schiene mit einer definierten Anstellkraft F_{A} andrückbar ist. Das Bearbeitungsfahrzeug 3 kann gegebenenfalls aus zwei oder mehreren gegebenenfalls unabhängig operierenden Wagen bestehen, beispielsweise wenigstens einem für das Formgebungswerkzeug 4 und wenigstens einem für die Rollkörper 6.

Der Rollkörper 6 ist mit einem Drehantrieb 8 ausgestattet, der den Rollkörper mit einem vor- oder nacheilenden Schlupf s von zwischen 0,001 und 20% über die Schiene 2 rollt. Der Drehantrieb 8 kann gleichermaßen als Bremstrieb wirken. Der Rollkörper 6 besteht aus einem höherfesten Material als die Schiene und weist eine vorgegebene, insbesondere feinstrukturierte, Oberflächenstruktur 9 mit einer Rautiefe von <10µm, insbesondere von <1µm, auf.

Der Rollkörper weist beispielsweise einen Durchmesser D von kleiner 50 mm auf und ist mit dem Stelltrieb 7 mit einem nominellen Kontaktdruck von 0,8 bis 2, insbesondere von 1,2 bis 1.75GPa, gegen die Lauffläche der Schiene angedrückt. Der nominellen Kontaktdruck herrscht im Kontaktbereich zwischen Schiene und Rollkörper vor.

In numerischen Untersuchungen zeigt sich, dass es schon nach einer Überrollung der zuvor abrasiv bearbeiteten Schiene mit gezielt ausgewählten Kontaktparametern (Wälzkörperdurchmesser, Kontaktdruck und je nach Geometrie und Belastung zwischen 0,001 und 20% mit einem vor- oder nacheilenden Schlupf) möglich ist die Oberflächenbeschaffenheit im gewünschten Sinne zu beeinflussen. Durch eine definierte Überrollung der Schiene mit dem Rollkörper kommt es zu einer Einebnung der Rauhigkeitsspitzen.

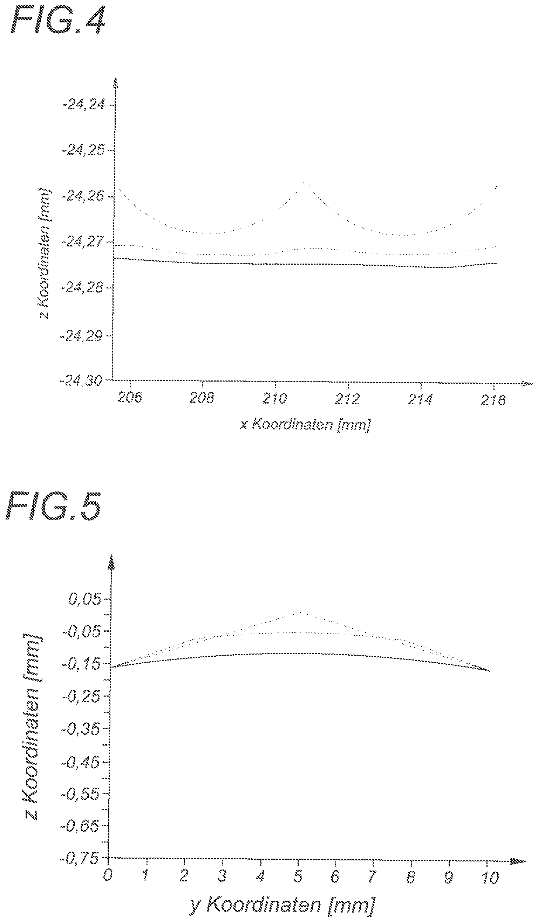

Fig. 4 zeigt eine Berechnung der Einebnung von Längswellenspitzen (normal auf die Schienenlängsrichtung) über die Darstellung der Oberflächenkoordinaten vor und nach mehreren simulierten Überrollungen mit einem Kontaktdruck von 1,25 GPa und einem bremsenden Schlupf von 1,5%. Die Schiene verläuft in Richtung der x-Koordinate. Die Z-Koordinate entspricht einer Schienenhochachse. Für eine Wellenspitzenhöhe von 12 µm ist unter den gegebenen Bedingungen ein Überrollungszyklus ausreichend um diese einzuebnen. Im speziellen ist eine Einebnung von Längswellen bei Überrollung mit einem glatten Rollkörper dargestellt Der Kontaktdruck entspricht 1,25 GPa, bei einem nacheilenden, also bremsenden, Schlupf von 1,5 %. Der Schienenstahl weist eine Güte von R260 auf. Es reicht ein Überrollzyklus für eine ausreichende Einebnung.

In Fig. 5 wird die Einebnung von Querwellen (Riffel) dargestellt. Die y-Koordinate entspricht einer Schienenquerachse. Eine Einebnung von Querwellen bei Überrollung mit einem glatten Rollkörper ist für zwei beispielhafte Fälle dargestellt. Einmal mit einem Kontaktdruck von 1 52 GPa und ein zweites Mal mit einem Kontaktdruck 1,69 GPa, mit einem nacheilenden Schlupf von 1,5 % und eines Schienenstahls der Güte R260. Mit den vorerwähnten gewählten Parametern lässt sich eine Querwelle mit nur einer Überrollung substantiell und vom Ausmaß her vergleichbar mit der Einebnung durch ein dem Schienenfräsen direkt nachgelagertes Schleifen einebnen.

## Patentansprüche

1. Verfahren zum Bearbeiten der Lauffläche einer Schiene mit Hilfe wenigstens eines entlang der Schiene bewegbaren und an deren Lauffläche andrückbaren, rotierenden, spanabhebenden Formgebungswerkzeugs, **dadurch gekennzeichnet, dass** nach der Bearbeitung mit dem spanabhebenden Formgebungswerkzeug wenigstens ein der formbearbeiteten Schienenoberfläche angepasster als Walze wirkender Rollkörper zwecks Einebnung von Unebenheiten der Lauffläche der Schiene, unter Kaltverformung der Lauffläche der Schiene über die Schiene gerollt wird.

2. Verfahren nach Anspruch 1, **dadurch gekennzeichnet, dass** der Rollkörper mit einem vor- oder nacheilenden Schlupf von zwischen 0,001 und 20% über die Schiene gerollt wird.

3. Verfahren nach Anspruch 1 oder 2, **dadurch gekennzeichnet, dass** der aus einem höherfesten Material als die Schiene bestehende Rollkörper mit einer vorgegeben, insbesondere feinstrukturierten, Oberflächenstruktur über die Schiene gerollt wird, wobei die Oberflächenstruktur im Überrollprozess plastisch in die Schiene eingedrückt wird.

4. Verfahren nach einem der Ansprüche 1 bis 3, **dadurch gekennzeichnet, dass** der Rollkörper mit einem nominellen Kontaktdruck von 0,8 bis 2, insbesondere von 1,2 bis 1,75GPa, über die Schiene gerollt wird.

5. Verfahren nach einem der Ansprüche 1 bis 4, **dadurch gekennzeichnet, dass** wenigstens zwei Rollkörper nacheinander unter Kaltverformung der Lauffläche der Schiene über die Schiene gerollt werden.

6. Verfahren nach Anspruch 5, **dadurch gekennzeichnet, dass** die Rollkörper mit unterschiedlichem Schlupf und/oder unterschiedlicher Oberflächenstruktur und/oder unterschiedlichem Kontaktdruck über die Schiene gerollt werden.

7. Vorrichtung zum Bearbeiten der Lauffläche (1) einer Schiene (2) mit einem schienengeführten Bearbeitungsfahrzeug (3) umfassend wenigstens ein entlang der Schiene (2) bewegbares und an deren Lauffläche (1) andrückbares, rotierendes, spanabhebendes Formgebungswerkzeug (4), **dadurch gekennzeichnet, dass** dem spanabhebenden Formgebungswerkzeug (4) in seiner Arbeitsrichtung (5) ein der formbearbeiteten Schienenoberfläche angepasster, als Walze wirkender Rollkörper (6) nachgeordnet ist, der zwecks Einebnung von Unebenheiten der Lauffläche (1) der Schiene (2), unter Kaltverformung der Lauffläche (1) der Schiene (2) mit dem Bearbeitungsfahrzeug (3) entlang der Schiene bewegbar und dabei mit einem Stelltrieb (7) gegen die Lauffläche (1) der Schiene (2) andrückbar ist.

8. Vorrichtung nach Anspruch 7, **dadurch gekennzeichnet, dass** der Rollkörper (6) mit einem Drehantrieb (8) und/oder Bremstrieb ausgestattet ist, der den Rollkörper (6) mit einem vor- oder nacheilenden Schlupf (s) von zwischen 0,001 und 20% über die Schiene rollt.

9. Vorrichtung nach Anspruch 7 oder 8, **dadurch gekennzeichnet, dass** der Rollkörper (6) aus einem höherfesten Material als die Schiene (2) besteht und eine vorgegebene, insbesondere feinstrukturierte, Oberflächenstruktur (9) mit einer Rautiefe von <10µm, insbesondere von <1µm, aufweist.

10. Vorrichtung nach einem der Ansprüche 7 bis 9, **dadurch gekennzeichnet, dass** der Rollkörper (6) mit dem Stelltrieb (7) mit einem nominellen Kontaktdruck von 0,8 bis 2, insbesondere von 1,2 bis 1,75GPa, gegen die Lauffläche (1) der Schiene (2) angedrückt ist.

## Claims

1. Method for machining the running surface of a rail using at least one rotating, machining shaping tool which can move along the rail and can be pressed against the running surface thereof, **characterised in that**, after machining with the machining shaping tool, at least one roller body, which acts as a roller and is adapted to the rail surface machined to shape, is rolled over the rail in order to even out irregularities on the running surface of the rail with cold-deformation of the running surface of the rail.

2. Method as claimed in claim 1, **characterised in that** the roller body is rolled over the rail with a leading or trailing slippage of between 0.001 and 20%.

3. Method as claimed in claim 1 or 2, **characterised in that** the roller body, which consists of a higher-strength material than the rail, is rolled over the rail with a predefined, in particular fine-structured, surface structure, wherein the surface structure is plastically pressed into the rail during the roll-over process.

4. Method as claimed in any one of claims 1 to 3, **characterised in that** the roller body is rolled over the rail at a nominal contact pressure of 0.8 to 2, in particular of 1.2 to 1.75 GPa.

5. Method as claimed in any one of claims 1 to 4, **characterised in that** at least two roller bodies are rolled over the rail one after another, with cold-deformation of the running surface of the rail.

6. Method as claimed in claim 5, **characterised in that** the roller bodies are rolled over the rail with different slippage and/or a different surface structure and/or different contact pressure.

7. Apparatus for machining the running surface (1) of a rail (2) with a rail-guided machining vehicle (3) comprising at least one rotating, machining shaping tool (4) which can move along the rail (2) and can be pressed against the running surface (1) thereof, **characterised in that** a roller body (6), which acts as a roller and is adapted to the rail surface machined to shape, is disposed downstream of the machining shaping tool (4) in its working direction (5), which roller body can move along the rail with the machining vehicle (3) in order to even out irregularities on the running surface (1) of the rail (2), with cold-deformation of the running surface (1) of the rail (2) and, in so doing, can be pressed against the running surface (1) of the rail (2) with an actuator (7).

8. Apparatus as claimed in claim 7, **characterised in that** the roller body (6) is fitted with a rotary drive (8) and/or brake actuator which rolls the roller body (6) over the rail with a leading or trailing slippage (s) of between 0.001 and 20%.

9. Apparatus as claimed in claim 7 or 8, **characterised in that** the roller body (6) consists of a higher-strength material than the rail (2) and comprises a predefined, in particular fine-structured, surface structure (9) with a roughness depth of <10 µm, in particular of <1 µm.

10. Apparatus as claimed in any one of claims 7 to 9, **characterised in that** the roller body (6) is pressed against the running surface (1) of the rail (2) with the actuator (7) at a nominal contact pressure of 0.8 to 2, in particular of 1.2 to 1.75 GPa.

## Revendications

1. Procédé pour profiler la surface de roulement d'un rail à l'aide d'au moins un outil de formage pouvant se déplacer le long du rail et pouvant être appliqué en rotation en enlevant des copeaux sur sa surface de roulement, **caractérisé en ce qu'**après le profilage avec l'outil de formage enlevant des copeaux, on fait rouler au moins un des corps roulants adapté à la surface de rail à profiler et agissant comme un rouleau sur le rail en déformant à froid la surface de roulement du rail afin d'aplanir les irrégularités de la surface de roulement du rail.

2. Procédé selon la revendication 1, **caractérisé en ce que** le corps roulant roule avec un patinage vers l'avant ou vers l'arrière de 0,001 à 20% sur le rail.

3. Procédé selon la revendication 1 ou 2, **caractérisé en ce que** le corps roulant constitué d'un matériau plus résistant que le rail roule sur le rail avec une structure de surface prédéfinie, en particulier une structure fine, la structure de surface étant imprimée plastiquement dans le rail.

4. Procédé selon une des revendications 1 à 3, **caractérisé en ce que** le corps roulant roule sur le rail avec une pression de contact nominale de 0,8 à 2 GPa, en particulier de 1,2 à 1,75 GPa.

5. Procédé selon une des revendications 1 à 4, **caractérisé en ce qu'**au moins deux corps roulants roulent l'un derrière l'autre sur le rail en déformant à froid la surface de roulement du rail.

6. Procédé selon la revendication 5, **caractérisé en ce que** les corps roulants roulent sur le rail avec un patinage différent et/ou une structure de surface différente et/ou une pression de contact différente.

7. Dispositif pour profiler la surface de roulement (1) d'un rail (2) avec un véhicule de profilage guidé sur rail (3) comprenant au moins un outil de formage (4) pouvant se déplacer le long du rail (2) et pouvant être appliqué en rotation en enlevant des copeaux sur sa surface de roulement (1), **caractérisé en ce que** derrière l'outil de formage enlevant des copeaux (4) dans sa direction de travail (5) est disposé un corps roulant (6) adapté à la surface de rail à profiler et agissant comme un rouleau qui, afin d'aplanir les irrégularités de la surface de roulement (1) du rail (2), peut se déplacer avec le véhicule de profilage (3) le long du rail en déformant à froid la surface de roulement (2) du rail (1) et peut être appliqué avec un mécanisme de réglage (7) contre la surface de roulement (1) du rail (2).

8. Dispositif selon la revendication 7, **caractérisé en ce que** le corps roulant (6) est équipé d'une commande de rotation (8) et/ou d'un mécanisme de freinage qui fait rouler le corps roulant (6) avec un patinage vers l'avant ou vers l'arrière (s) de 0,001 à 20% sur le rail.

9. Dispositif selon la revendication 7 ou 8, **caractérisé en ce que** le corps roulant (6) est constitué d'un matériau plus résistant que le rail (2) et présente une structure de surface (9) prédéfinie, en particulier une structure fine, avec une rugosité de surface < 10 µm, en particulier < 1 µm.

10. Dispositif selon une des revendications 7 à 9, **caractérisé en ce que** le corps roulant (6) est appliqué à l'aide du mécanisme de réglage (7) avec une pression de contact nominale de 0,8 à 2 GPa, en particulier de 1,2 à 1,75 GPa, contre la surface de roulement (1) du rail (2).
